# FASCICULE DE BREVET EUROPEEN

(11) **EP 0 315 542 B1**
(45) Date de publication et mention de la délivrance du brevet: **10.02.1993**
(21) Numéro de dépôt: 88402773.1
(22) Date de dépôt: 04.11.1988
(51) Int. Cl.: B23B 31/00, F16B 19/02, F15B 15/02

(54) **Dispositif de fixation rapide et verin associe**
Schnellspannvorrichtung und zugeordnete Kolben
Quick-clamping device and piston therefor

(30) Priorité: 06.11.1987 FR 8715745; 06.11.1987 FR 8715746
(43) Date de publication de la demande: 10.05.1989
(73) Titulaire: Neyret, Guy, F-69340 Francheville (FR)
(72) Inventeur: Neyret, Guy, F-69340 Francheville (FR)
(74) Mandataire: Dawidowicz, Armand

(56) Documents cités:
- CA-A- 1 164 287
- DE-A- 2 256 190
- DE-A- 2 544 558
- DE-A- 3 541 638
- DE-B- 1 477 140
- GB-A- 790 771
- GB-A- 1 390 931
- GB-A- 2 108 622
- GB-A- 2 127 721
- US-A- 3 717 073

## Description

L'invention concerne un dispositif de fixation rapide d'outil ou de porte-pièce permettant un changement rapide et un repositionnement sans réglage autorisant une grande souplesse et une rapidité élevée d'adaptation, ainsi qu'un vérin à guidage intégré utilisant un tel dispositif.

Lorsqu'un vérin doit actionner un mécanisme avec un bon guidage, on doit prévoir un dispositif auxiliaire de guidage du fait du jeu de la tige du vérin et de son faible diamètre. Un tel dispositif auxiliaire de guidage, qui peut être constitué par un guidage à colonnes, a rails, à billes ou rouleaux, à glissières, etc., nécessite une liaison souple avec le vérin pour éviter les effets d'un défaut d'alignement. Un tel ensemble est coûteux, compliqué et encombrant, et sa mise en place prend un temps important.

On connaît (EP-A-224.770) un dispositif de serrage d'outil assuré par une bague soumise à l'action de billes. Les billes sont elles-mêmes commandées par un coulisseau soumis à l'action d'un ressort de rappel et le déplacement du coulisseau est commandé par la translation d'une pièce munie d'un profil de commande. Un tel dispositif de serrage est de construction compliquée et onéreuse. En outre, il ne permet pas d'assurer le guidage du mécanisme.

La présente invention vise à fournir un nouveau vérin comportant son propre guidage de précision intégré, qui soit d'une mise en oeuvre très simple et rapide, tout en étant économique, robuste et peu encombrant.

A cet effet, l'invention a pour objet un dispositif de fixation rapide d'outil ou de porte-pièce du type comprenant un tirant et une goupille traversant l'outil ou le porte-pièce pour sa fixation sur ledit tirant, ledit tirant étant constitué par un axe coulissant dans une tige, ladite goupille traversant ladite tige et étant munie d'un méplat de dégagement, caractérisé en ce que ledit axe est muni d'une tête traversée par ladite goupille, que la goupille est montée rotative autour de son axe, l'axe étant soumis par rapport à ladite tige à une charge élevée de rappel vers ladite goupille de manière à le maintenir en contact sous pression élevée avec ladite goupille pour fixer la goupille dans la tige.

De préférence, un second méplat décalé angulairement par rapport au méplat de dégagement assure une position stable de fixation. La suppression de la charge sur le mécanisme ou l'outil permet un démontage aisé par extraction de la goupille, le remontage se faisant par l'opération inverse.

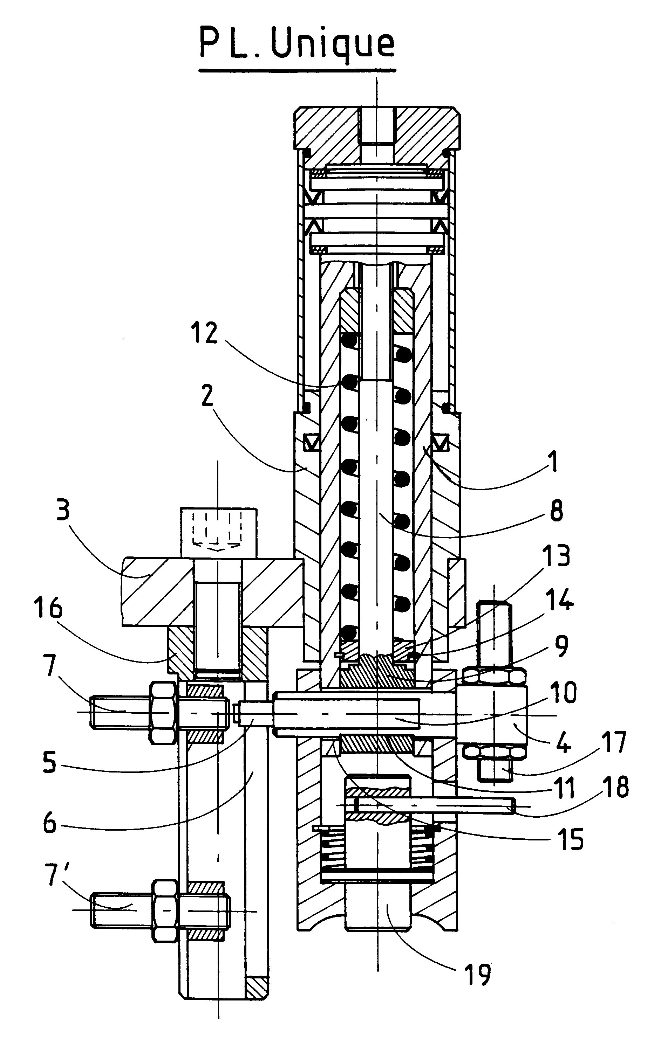

L'invention sera bien comprise à la lecture de la description suivante faite en se référant au dessin annexé dans lequel la figure unique est une vue en coupe axiale, partiellement en élévation, d'une partie d'un vérin muni d'un dispositif de fixation rapide selon l'invention.

Le vérin comporte une tige 1 coulissant dans une bague de guidage 2 solidaire d'un bâti 3. L'outil monté sur la tige 1 est muni d'une goupille transversale 4 dont la pointe 5 coulisse dans une rainure 6 du guide 16, afin d'interdire la rotation de la tige 1.

Conformément à l'invention, la tige 1 comporte un axe interne 8 dont la tête 9 est traversée par la goupille 4. Cette goupille 4 comporte un méplat de dégagement 10 et un second méplat 11, plus étroit, à 90° du méplat 10, servant au positionnement précis et stable de la goupille 4. L'axe 8 est entouré par un ressort hélicoïdal 12 en appui sur une bague 13 elle-même arrêtée par une butée 14. L'autre extrémité de la tige 8 est solidaire de l'autre extrémité du ressort 12. La tête 9 de l'axe 8 est en regard d'une creusure 15 à l'intérieur de la tige 1, qui permet un certain jeu axial de la tige 8, contre l'action du ressort 12. Par décompression partielle du ressort 12, on peut ainsi libérer l'axe 4 et changer facilement le mécanisme ou l'outil.

Ce système, qui comporte un tirant fortement chargé (de l'ordre de 100kg par exemple) et un axe à mouvement excentrique, peut être utilisé d'une manière générale pour la fixation rapide à positionnement stable de tout outil ou porte-pièce dans une machine, donnant une grande flexibilité d'adaptation, à différents types de pièces par exemple.

Un capteur 17 du type inductif est disposé dans un alésage de la tête de la goupille 4 et coopère avec un palpeur de pièces 19 et 18 dans l'outil. On détecte ainsi la présence ou l'absence de pièce dans l'outil, ainsi qu'éventuellement le positionnement de la pièce, sans disposer de capteur dans l'outil lui-même. On évite ainsi d'avoir à brancher et régler le capteur à chaque changement d'outil.

Le guide 8 porte en outre deux capteurs 7, 7' coopérant avec la pointe 5 de la goupille 4 pour détecter les fins de course du vérin. Les capteurs 7, 7' peuvent être remplacés par des interrupteurs fin de course.

La goupille 4 assure ainsi à elle seule un quadruple rôle :
- fixation rapide de l'outil ou du mécanisme.
- détection des fins de course du mécanisme ou de l'outil.
- détection de la présence ou de l'absence, éventuellement du bon positionnement de la pièce.
- anti-rotation du mécanisme ou de l'outil.

## Revendications

1. Dispositif de fixation rapide d'outil ou de porte-pièce du type comprenant un tirant (1, 8) et une goupille (4) traversant l'outil ou le porte-pièce pour sa fixation sur ledit tirant (1, 8), ledit tirant étant constitué par un axe (8) coulissant dans une tige (1), ladite goupille (4) traversant ladite tige (1) et étant munie d'un méplat de dégagement (10),
caractérisé en ce que ledit axe (8) est muni d'une tête (9) traversée par ladite goupille (4), que la goupille (4) est montée rotative autour de son axe, l'axe (8) étant soumis par rapport à ladite tige (1) à une charge élevée (12) de rappel vers ladite goupille (4) de manière à le maintenir en contact sous pression élevée avec ladite goupille (4) pour fixer la goupille (4) dans la tige (1).

2. Dispositif selon la revendication 1,
caractérisé par le fait que la goupille (4) comporte un second méplat (11) décalé angulairement par rapport au méplat de dégagement (10).

3. Dispositif selon l'une des revendications 1 et 2,
caractérisé par le fait que ladite goupille (4) coopère avec la tête (9) d'un axe (8) rappelé par un ressort (12) de forte charge en position de pression sur ledit axe (4), ladite tête (9) disposant d'un jeu axial contre l'action dudit ressort (12).

4. Dispositif selon l'une des revendications 1 à 3,
caractérisé par le fait que ladite goupille (4) coopère avec une rainure (6) pour interdire la rotation du mécanisme ou de l'outil.

5. Dispositif selon l'une des revendications 1 à 4,
caractérisé par le fait que l'extrémité (5) de ladite goupille (4) coopère avec au moins un organe de détection de position tel que capteur (7, 7') ou interrupteur.

6. Dispositif selon l'une des revendications 1 à 5,
caractérisé par le fait que la tête de la goupille (4) est percée d'un alésage recevant un capteur (17) du type inductif coopérant avec un palpeur de pièce (18, 19) dans l'outil.

7. Vérin à guidage intégré muni d'un dispositif selon l'une des revendications 1 à 6,
caractérisé par le fait que sa tige est constituée par une colonne rectifiée (1) dont le diamètre est supérieur aux deux-tiers du diamètre du piston et qui coulisse dans une bague de guidage (2) fixe, ledit vérin comportant des moyens d'arrêt en rotation de la tige (1) ou de l'outil monté sur la tige (1).

8. Vérin selon la revendication 7,
caractérisé par le fait que lesdits moyens sont constitués par une goupille transversale (4) coopérant avec une rainure (6) d'un guide (16).

9. Vérin selon la revendication 8,
caractérisé par le fait que ledit guide (16) comporte des moyens de détection (7, 7') de la proximité de la goupille (4) à au moins une position de la rainure de guidage (6), lesdits moyens constituant un système de détection de fin de course de la tige (1).

## Claims

1. Device for fast fixation of a tool or of a piece-carrier of the type including a tie-rod (1, 8) and a pin (4) going through the tool or the piece-carrier, for its fixation on the tie-rod (1, 8) said tie-rod being formed by an axle (8) slide within a rod (1), said pin (4) going through said rod (1) and being fitted with a release flat (10),
characterized in that said axle (8) is provided with a head (9) crossed by said pin (4), that pin (4) is mounted for rotation around its axis, axle (8) being submitted with respect to said rod (1) to a high load (12) of urging towards said pin (4) so as to maintain it in contact under high pressure with said pin (4) in order to fix pin (4) in rod (1).

2. Device according to claim 1,
characterized by the fact that pin (4) includes a second flat (11) angularly displaced with respect to the release flat (10).

3. Device according to one of claims 1 and 2,
characterized by the fact that said pin (4) co-operates with the head (9) of an axle (8) urged by a spring (12) of high load in position of pression on said axle (4), said head (9) having an axial play against the action of said spring (12).

4. Device according to one of claims 1 to 3,
characterized by the fact that said pin (4) co-operates with a groove (6) to hamper rotation of the mecanism or of the tool.

5. Device according to one of claims 1 to 4,
characterized by the fact that the end (5) of said pin (4) cooperates with at least one position detecting element such as a detector (7, 7') or a switch.

6. Device according to one of claims 1 to 5,
characterized by the fact that the head of pin (4) is pierced with a bore receiving a detector (17) of the inductive type which co-operates with a piece feeler (18, 19) within the tool.

7. Jack with integrated guiding fitted with a device according to one of claims 1 to 6,
characterized by the fact that its stem is formed by a rectified column (1) the diameter of which is larger than two thirds of the diameter of the piston and which slides in a fixed guiding ring (2), said jack including means for arresting in rotation the stem (1) or the tool mounted on stem (1).

8. Jack according to claim 7,
characterized by the fact that said means are formed by a transverse pin (4) co-operating with a groove (6) of a guiding member (16).

9. Jack according to claim 8,
characterized by the fact that said guiding member (16) has means (7, 7') for detecting the proximity of pin (4) at least one position of the guiding groove (6), said means forming a system for detecting the end of travel of stem (1).

## Patentansprüche

1. Schnellspannvorrichtung von Werkzeugen oder Stückträgern der Art, daß sie eine Spannstange (1,8) und einen Stift (4) umfaßt, der das Werkzeug oder den Stückträger zu seiner Einspannung auf der Spannstange (1,8) durchkreuzt, wobei die Spannstange von einer in eine Stange (1) gleitende Achse (8) gebildet wird, und wobei der Stift (4) die genannte Stange (1) durchkreuzt, und er mit einer Freistich-Rechteckstange (10) ausgerüstet ist, dadurch gekennzeichnet, daß die Achse (8) mit einem Kopf (9) ausgestattet ist, der von dem Stift (4) durchkreuzt wird, und daß der Stift (4) drehbar um seine Achse angebracht ist, wobei die Achse (8) bezüglich der Stange (1) einer erhöhten Belastung (12) der Rückwärtsbewegung zum Stift (4) hin unterleigt, so daß sie unter erhöhtem Druck mit dem Stift (4) gehalten wird, um den Stift (4) in der Stange (1) einzuspannen.

2. Vorrichtung nach Anspruch 1, dadurch gekennzeichnet, daß der Stift (4) eine zweite Rechteckstange (11) aufweist, die bezüglich der Freistich-Rechteckstange (10) winklig versetzt ist.

3. Vorrichtung nach einem der Ansprüche 1 und 2, dadurch gekennzeichnet, daß der Stift (4) mit dem Kopf (9) der Achse (8) zusammenarbeitet, die von einer starken Belastungsfeder (12) in Druckstellung auf die Achse (4) zurückgestellt wird, wobei der Kopf (9) über ein axiales Spiel gegen die Bewegung der Feder (12) verfügt.

4. Vorrichtung nach einem der Ansprüche 1 bis 3, dadurch gekennzeichnet, daß der Stift (4) mit einer Rille (6) zusammenarbeitet, um die Drehung des Apparates oder des Werkzeugs unmöglich zu machen.

5. Vorrichtung nach einem der Ansprüche 1 bis 4, dadurch gekennzeichnet, daß das Ende (5) des Stiftes (4) mit zumindest einem Positionserfassungsorgan wie einem Lagesensor (7, 7') oder einem Lageschalter zusammenarbeitet.

6. Vorrichtung nach einem der Ansprüche 1 bis 5, dadurch gekennzeichnet, daß der Kopf des Stiftes (4) von einer Bohrung durchstochen ist, die einen Sensor (17) der induktiven Art beherbergt, der mit einem Stückfühler (18,19) im Werkzeug zusammenarbeitet`

7. Integrierte Führungswinde, die mit einer Vorrichtung gemäß einem der Ansprüche 1 bis 6 ausgerüstet ist, dadurch gekennzeichnet, daß ihre Stange von einer maßgeschliffenen Säule (1) gebildet wird, deren Durchmesser größer als Zweidrittel des Kolbendurchmessers ist, und die in einen festen Führungsring (2) gleitet, und daß die Winde Feststellmittel für die Drehung der Stange (1) oder des Werkzeugs, das auf der Stange (1) angebracht ist, besitzt.

8. Winde nach Anspruch 7, dadurch gekennzeichnet, daß die genannten Mittel von einem querliegenden Stift (4) gebildet werden, der mit einer Rille (6) einer Führung (16) zusammenarbeitet.

9. Winde nach Anspruch 8, dadurch gekennzeichnet, daß die Führung (16) Erfassungsmittel (7, 7') für die Nähe des Stiftes (4) zu zumindest einer Stelle der Führungsrille (6) aufweist, und daß die Mittel ein Erfassungssystem bilden für das Ende des Laufes der Stange (1).
